(19) Europäisches Patentamt
European Patent Office
Office européen des brevets

(11) **EP 4 057 493 A1**

(12) **EUROPEAN PATENT APPLICATION**

(43) Date of publication:
**14.09.2022 Bulletin 2022/37**

(21) Application number: **21161529.9**

(22) Date of filing: **09.03.2021**

(51) International Patent Classification (IPC):
**H02M 7/483** (2007.01)    **H02M 7/5395** (2006.01)
**H02M 1/00** (2006.01)    **H02M 1/12** (2006.01)

(52) Cooperative Patent Classification (CPC):
**H02M 7/4837; H02M 7/5395;** H02M 1/0043;
H02M 1/12; H02M 7/4833

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **ABB Schweiz AG
5400 Baden (CH)**

(72) Inventors:
• SCHWEIZER, Mario
5406 Rütihof (CH)
• CHRISTEN, Daniel
8049 Zürich (CH)
• BISHNOI, Hemant
5430 Wettingen (CH)

(74) Representative: **Maiwald Patent- und
Rechtsanwaltsgesellschaft mbH
Elisenhof
Elisenstraße 3
80335 München (DE)**

(54)    **N-LEVEL CONVERTER AND METHOD WITH IMPROVED PHASE SHIFTED CARRIER MODULATION**

(57)    The invention relates to an N-level converter (100). The converter is configured to generate an output voltage out of N output voltage levels. The N level converter comprises a switching circuit (104) with a number of switches, and a control circuit (102). The control circuit is configured to generate a reference signal. The reference signal has N voltage levels, wherein adjacent reference signal voltage levels define reference signal voltage sub-ranges and wherein all reference signal voltage sub-ranges form a reference signal voltage full-range. The control circuit is further configured to generate M carriers. Each of the M carriers covers the reference signal voltage full-range. The control circuit is further configured to compare a number of carriers out of the M carriers with the references signal, to generate a PWM pulse for each of the compared carriers based on the comparison, and to control a converter switch arrangement out of the number of switches using the PWM pulses for generating a voltage contributing to an converter output voltage level to be generated. The M carriers are divided into L carrier sets. Each carrier set includes the carriers to be compared.

5-level Improved Phase Shifted Carrier Modulation (iPS)

Fig. 8a

**Description**

FIELD OF THE INVENTION

The present invention relates to an N-level converter, a method for generating an output voltage in an N-Level converter, a logic instruction arrangement, a controller for an N-Level converter, and a usage of a logic instruction arrangement.

BACKGROUND

Usually, the switching signals for any flying capacitor multilevel topology are generated with phase shifted (PS) carrier modulation. This modulation method leads, however, to an inferior differential mode output voltage spectrum and accordingly to an increased filtering effort when compared to other modulation methods such as level-shifted in-phase disposition carrier (LS-IPD) modulation. LS-IPD leads to an unequal distribution of losses on the semiconductors and has some characteristics similar to those mentioned for the space vector (SV) modulation. In addition, a separate unit is required to distribute the switching signals to the individual switches to achieve balancing of the flying capacitor voltages or an even loss distribution among the semiconductor devices. This redundant state distribution unit is complex and becomes gradually more difficult to implement with higher number of voltage levels. With space vector modulation (SV), for the voltage generation, as for instance the equal distribution of the switching losses among the individual switches or the balancing of the flying capacitor voltages, a selector unit is required to select the proper space vector out of several redundant space vectors. The number of redundant vectors, by which the same voltage vector can be generated, increases with the higher number of voltage levels resulting in an increasing complexity of the selection algorithms too. Due to the higher and higher complexity with increasing number of voltage levels this method is rarely used in topologies with more than 3 levels.

SUMMARY

An objective of the invention may be to provide an improved and cost-efficient N-Level converter.
The problem is solved by the subject-matter of the independent claims. Embodiments are provided by the dependent claims, the following description and the accompanying figures.
The described embodiments similarly pertain to the method for an N-level converter, a method for generating an output voltage in an N-Level converter, a logic instruction arrangement, a controller for an N-Level converter, and a usage of a logic instruction arrangement. Synergetic effects may arise from different combinations of the embodiments although they might not be described in detail.
Further on, it shall be noted that all embodiments of the present invention concerning a method, might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.
Technical terms are used by their common sense. If a specific meaning is conveyed to certain terms, definitions of terms will be given in the following in the context of which the terms are used.
According to a first aspect, an N-level converter is provided. The converter is configured to generate an output voltage out of N output voltage levels. The N level converter comprises a switching circuit with a number of switches, and a control circuit. The control circuit is configured to generate a reference signal. The reference signal has N voltage levels, wherein adjacent reference signal voltage levels define reference signal voltage sub-ranges and wherein all reference signal voltage sub-ranges form a reference signal voltage full-range. The control circuit is further configured to generate M carriers. Each of the M carriers covers the reference signal voltage full-range. The control circuit is further configured to compare a number of carriers out of the M carriers with the reference signal to generate a pulse width modulation (PWM) pulse for each of the compared carriers based on the comparison. Further, it is configured to control a converter switch arrangement out of the number of switches using the PWM pulses for generating a voltage contributing to a converter output voltage level to be generated. Here, the M carriers are divided into L carrier sets. Each carrier set includes the carriers to be compared, and each carrier set is assigned to one of the reference signal voltage sub-ranges. Only that carrier set is active for the generation of PWM pulses that is assigned to the sub-range the reference signal voltage is in.
The N-Level converter is also known as multi-level converter. The converter is capable to generate voltages of essentially N voltage levels. The converter comprises a number of switches, for example, semiconductor switches to generate the output voltage, and a control circuit that controls the switches. The control of the switches is performed by using a reference input signal that has to be converted into a control or switching signals. Such a control signal is a PWM signal. In order to obtain the PWM, an analog reference signal is used that corresponds in shape essentially to the local average of the output signal, where, however, the output signal has of course one of the N voltage levels. The number of reference signal voltage sub-ranges corresponds to the number N-1 of converter output voltage sub-ranges defined by the N output voltage levels. The modulation of the PWM is performed by comparing a carrier, e.g. a triangular signal, with the reference signal. Only as an example, if currently the voltage of the carrier signal is higher than the voltage of the reference signal, the control signal is "high" and thus a controlled semi-conductor is switched on. If the switches are arranged as a half-bridge, two semi-conductors may be controlled such that one of them is on, and the other one is off. Other arrangements are possible. In this disclosure, an arrangement of semi-conductors that are controlled based on one comparison such as the two semi-conductors of a half bridge, are designated "switch arrangement". That is, a "switch arrangement" is only one functional unit of the totality of switches that is controlled based on a single comparison output signal. A switch arrangement may comprise one, two or more semi-conductors. Each switch arrangement contributes to the converter output voltage, depending on the control signal. The M carriers differ in phase, have the same maximum and minimum voltage values, and cover at least two reference voltage sub-ranges. That is, the shape of the carriers is the same, and they are only phase shifted to each other. Preferably, the carriers cover all reference voltage sub-ranges. More preferably, the minimum amplitude of the carriers is the lowest reference voltage level and the maximum amplitude is the highest reference voltage level. The M carriers are divided into L carrier sets. For example, the phase shifted carriers are alternately assigned to a first and a second carrier set. Other assignments are possible. Each carrier set includes the carriers to be compared, and each carrier set is assigned to one of the reference signal voltage sub-ranges, wherein only that carrier set is active for the generation of PWM pulses that is assigned to the sub-range the reference signal voltage is in. That is, only one of the carrier sets is active. In principle, all carriers may be compared to the reference signal and only those comparison output signals are used that belong to the active carrier set. In a more practicable manner, only those carriers are compared to the reference signal that belong to the active carrier set such that only one comparison output with respect to the different sets is generated. If the reference signal leaves a sub-range and moves into a new sub-range, the active set is de-activated and the set of the new sub-range is activated.

The N-level converter is applicable for any number of voltage levels and many different multi-level topologies. It offers low complexity, low computational implementation effort, and is especially attractive for multi-level converter systems with a high number of voltage levels.

According to an embodiment, different carrier sets control the same switch arrangements and the sequence of the carriers is such that the sets are cycling. In an example, there are L=2 different carrier sets and J=4 switch arrangements. Then, both, the first carrier set would control the four switch arrangements, and the second carrier set would control the four switch arrangements. In general, M >= J, such that M carriers control the J switch arrangements. If M = 8 carriers are sub-divided into L=2 carrier sets, 4 carriers per set are obtained. One of the 2 carrier sets is active in one of the voltage sub-ranges of the reference signal. The active set changes when the reference signal leaves a voltage sub-range. For example, if there were four sub-ranges, a first carrier set would be active if the reference signal level would be in a first sub-range, a second carrier set would be active if the reference signal level would be in a second sub-range, a third carrier set or again the first carrier set would be active if the reference signal level would be in a third sub-range, etc.

According to an embodiment, the carriers are equally-spaced phase shifted. For example, and according to an embodiment, if there are two carrier sets (L=2), the carriers of a carrier set are shifted by a phase angle of $360°/(N-1)$ to each other, with respect to the carrier frequency $\omega_c = 2\pi f_c$. If, in an example, there are two sets of carriers, the carriers of the second set may internally also be shifted by a phase angle of $360°/(N-1)$ to each other, and the two sets may be shifted by $360°/(2(N-1))$ against each other, such that the carriers of the two sets are interleaved one-by-one. Then, all carriers would be separated by $360°/(2(N-1))$ from the adjacent carriers. For other numbers of sets, the phase shifts may be adapted correspondingly.

According to a further embodiment, each carrier has a triangular shape. The carriers cover the complete range of the voltage of the reference signal. Thus, the amplitude rises linearly from the lowest voltage level to the highest voltage level of the N pre-defined levels that define the sub-ranges, and linearly back to the lowest voltage level, therefore having a triangular shape. The triangles of a carrier are repeated without any pause times in-between the triangles, and there are no deviations from the pure triangular shape. This implementation allows for an easy and cost-effective implementation.

According to a further embodiment, the number of reference voltage sub-ranges equals the number of levels N minus one, and a ratio of reference voltage sub-ranges to the number of sets L is a positive integer. For example, there are N levels, e.g. 5, corresponding to a 5-level converter. Then, N-1=4 sub-ranges are obtained and the number of sets may be 2, such that the ratio is 2. Seen from another aspect, the two sets are used twice for the 4 sub-ranges.

According to a further embodiment, the N-Level converter comprises half bridges, and a switch arrangement comprises a high-side switch and a low-side switch of the half bridge. One possible implementation of an N-level converter is a converter build up by half-bridges as known by a skilled person. A half-bridge comprises two switches that are switched in an opposite way to each other. A carrier may control the two switches of a half-bridge by switching on one of them and contemporarily switching off the other one.

According to a further embodiment, the N-Level converter is an N-level flying capacitor converter system, a N-level classic flying capacitor converter system, a multi-level converter system, an interleaved half-bridge converter system, a cascaded H-bridge or a modular multi-level converter system.

According to a further embodiment, the N-Level converter comprises spectral characteristics essentially based on one or more of the following parameters: number of carriers, number of carrier sets and/or assignment of carrier set to the reference voltage levels. That is, the number of carriers, the number of carrier sets, and the assignment of carrier sets to the reference voltage levels have an impact on the spectral characteristics of the converter, and the configuration is chosen in such a way that the spectral characteristics are optimized. That means particularly, that the unwanted harmonics are minimized. In other words, the N-Level converter as described above allows for selecting parameter values that improve the spectral characteristics, wherein these parameters are only available in the described converter but not in usual converters. The optimization may be supported by using calculations and algorithms. In a very basic way, the combinations, i.e. the permutations are tried one after the other and the spectra are measured for each combination.

According to a further embodiment, the N-Level converter comprises an LCL filter with optimized spectral characteristics as described above, wherein a weight component is defined by the LCL filter, and wherein the weight component is based on the selection of one or more of the following LCL filter design parameters: space of cores, wire sizes and/or capacitors. Similarly as for the spectral characteristics, the concept and the design of the described converter allows for optimizing the weight of the converter by selecting suitable values of parameters of the filter such that there is room for selecting a filter hardware that has a low weight. Therefore, the converter has improved spectral characteristics and reduced weight compared to usual converters, resulting in improved performance and reduced costs.

According to a further aspect, a method for controlling switch arrangements in an N-Level converter as described herein is provided. The method comprises the following steps: generating a reference signal within a reference voltage full range, wherein the reference voltage full range is formed by reference voltage sub-ranges defined by N reference voltage levels, generating M carriers, each carrier covering the reference signal voltage full-range, comparing a number of carriers out of the M carriers with the references signal, generating a PWM pulse for each of the compared carriers based on the comparison, controlling a converter switch arrangement out of the number of switches using the PWM pulses for generating a voltage contributing to an converter output voltage level to be generated, wherein the M carriers differ in phase and have the same maximum and minimum voltage values, and wherein the M carriers are divided into L carrier sets, each carrier set including the carriers to be compared, and each carrier set is assigned to one of the reference signal voltage sub-ranges, wherein only that carrier set is active for the generation of PWM pulses that is assigned to the sub-range the reference signal voltage is in.

The method is referred to as improved phase shifted carrier modulation (iPS) in this disclosure.

That is, the M carriers are sub-divided into L carrier sets. One of the L carrier sets is active in one of the voltage sub-ranges of the reference signal and the active set changes when the reference signal leaves a voltage range. The method corresponds to the configuration of the system described herein to which is referred here.

According to a further aspect, a logic instruction arrangement for an N-Level converter as presented herein is provided. The logic instructions are configured to perform the method for controlling switch arrangements of the system. The logic instruction arrangement comprises logic that may be implemented as hardware and/or software. Accordingly, the instructions may be a hardwired, a soft-wired and/or a stored instruction set such as a program. They may be stored on a memory and loaded and/or executed on a microprocessor, micro controller, a field programmable gate array (FPGA), an ASIC, a Complex Programmable Logic Device (CPLD), or other logic elements or logic devices known to a skilled person. The logic instruction arrangement may comprise a computer program element being part of a computer program, but it can also be an entire program by itself. For example, the computer program element may be used to update an already existing computer program to get to the present invention

According to a further aspect, a controller for an N-Level converter comprising such a logic instruction arrangement and/or analog circuits is provided. The controller may be the control circuit of the N-Level converter as described above or comprise the control circuit. Thus, the controller is configured to control the N-Level converter. The controller may not only comprise the logic arrangement but also analog devices, such as analog or mixed integrated circuits or discrete elements such that, for example, an analog signal such as the reference voltage signal can be generated and be processed, and such that carriers can be generated and processed.

According to a further aspect, a usage of such a logic instruction arrangement for an N-level converter is provided.

According to a further aspect, a usage of such an N-level converter in an electrical vehicle (EV) charging station, an uninterrupted power supply (UPS) system, a photovoltaic (PV) converter, a battery energy storage system (BESS) or a high speed drive is provided.

The N-level converter, the method, and the logic instruction arrangement are easy to implement. For example, low-cost DSP computing platforms with integrated PWM units may be used. Moreover, it provides a good output voltage quality. It provides low filtering effort and only a low filter size is necessary, resulting in low costs per volume, weight, and power ratio. Among the semiconductors, an equal loss distribution is obtained resulting in an improved performance of the converter system, since the semiconductors can be better utilized. Further, the converter and the method provide a natural balancing of the flying capacitor voltages. This makes this modulation method very attractive, especially for multi-level topologies with a high number of voltage levels, where the high complexity selection algorithms of other modulation methods (e.g. SV or LS-IPD) are extremely difficult to handle.

These and other features, aspects and advantages of the present invention will become better understood with reference to the accompanying figure and the following description. Identical or equivalent elements are in principle provided with the same reference signs.

SHORT DESCRIPTION OF THE FIGURES

Fig. 1 shows a space vector diagram of a 5-level converter,

Fig. 2 shows a diagram of Phase shifted (PS) modulation,

Fig. 3 shows a diagram of a spectrum of a 5-level Phase Shifted Carrier Modulation,

Fig. 4 shows a diagram of level-shifted in-phase disposition (LS-IPD) carrier modulation,

Fig. 5 shows a diagram of an LS-IPD carrier modulation process and switched output voltage for a 5-level converter system,

Fig. 6 shows a diagram of a differential mode output voltage spectrum using the LD-IPD carrier modulation method,

Fig. 7 shows a block diagram of the N-level converter according to an embodiment,

Fig. 8a shows a diagram of the carrier sets in the carrier modulation process according to an embodiment, with two carrier sets,

Fig. 8b shows a diagram of the carriers and the voltage reference in the carrier modulation process according to an embodiment,

Fig. 8c shows a diagram of the converter output voltage in carrier modulation process according to an embodiment,

Fig. 9 shows a table comparing weights of the converter,

Fig. 10 shows a flow diagram of a method according to an embodiment.

DETAILED DESCRIPTION OF EMBODIMENTS

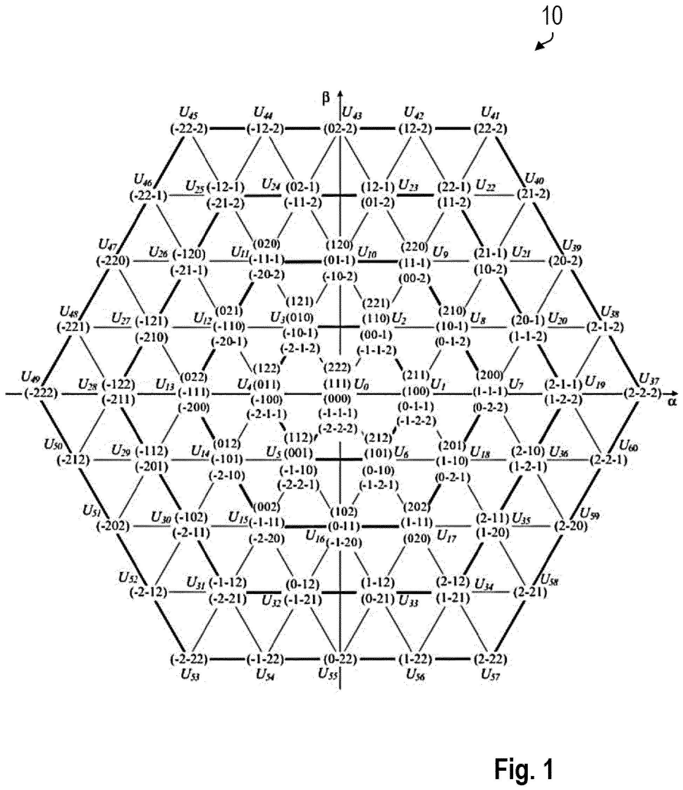

Figs. 1 to 3 depict diagrams that show current technologies and are used to explain the techniques and the problems of these techniques and how the invention solves these problems.

Fig. 1 shows a space vector diagram 10 of a 5-level converter. Redundant switching states are indicated in brackets. Space vector modulation may be applied to converters with three or N voltage levels. The output voltage is modulated by selecting suitable discrete voltage vectors that are close to the reference voltage vector. The SV modulation has a very good output voltage spectrum and therefore requires low filtering effort. There is a redundancy of certain space vectors, meaning that the same space vector can be generated by different switching states. The redundant space vectors are used for different tasks as for example to influence the loading and balancing of the flying capacitors, to distribute the switching actions among the semiconductors or for the creation of common mode voltages. What works fine with the 3-level NPC converter becomes more and more cumbersome in multilevel inverters. As shown in Fig. 1, the number of redundant space vectors increases with the higher number of voltage levels. The complexity that is required to handle these tasks and to perform a proper selection of the space vectors is increasing rapidly. Therefore, space vector modulation is rarely adopted in multilevel converters with more than three levels.

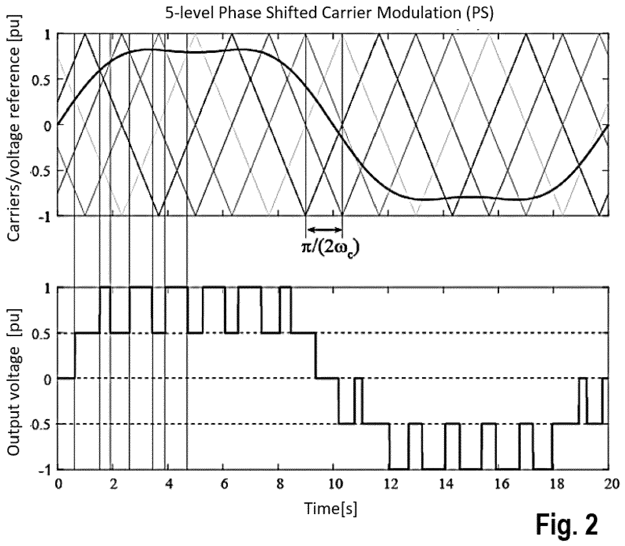

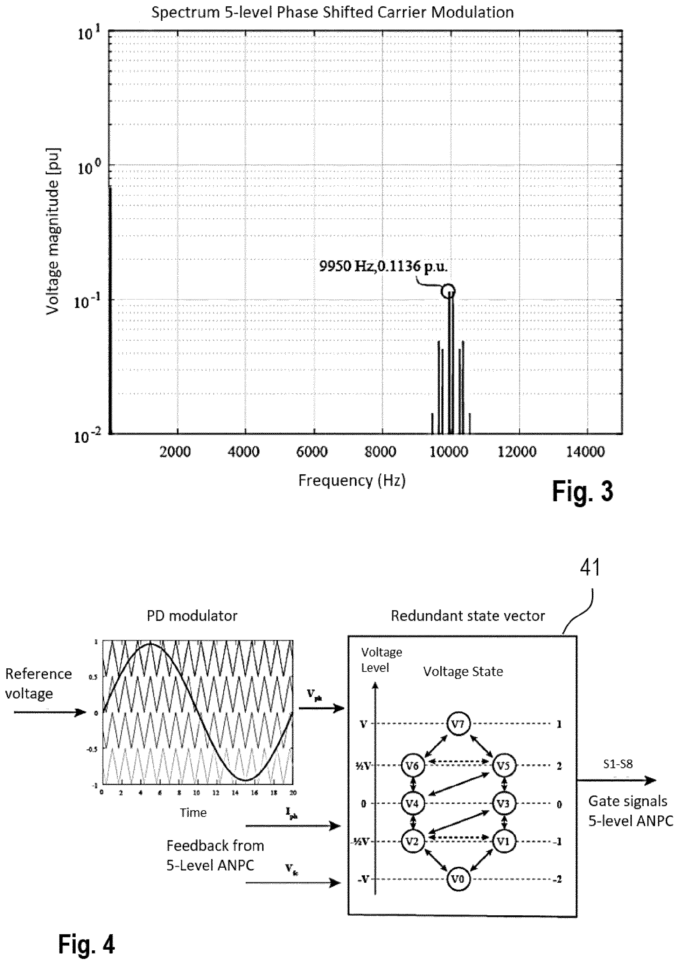

Fig. 2 shows a diagram of Phase shifted (PS) modulation. PS modulation is among the simplest modulation methods for flying capacitor multilevel converters. For a converter with N output voltage levels, N-1 triangular carriers are required. These carriers are phase shifted against each other by an angle difference of 360°/(N-1). Each switching cell in a flying capacitor converter receives the switching signal created by comparing the voltage reference waveform with one of the triangular carriers. PS modulation provides a natural balancing effect on the flying capacitors and naturally cycles through all possible redundant switching states of the topology guaranteeing an equal distribution of the switching actions to the individual switching cells. However, it shows an inferior output voltage quality as can be seen in Fig. 3. By inspecting the differential output voltage spectrum, one can see that this modulation method puts most of its harmonic energy into the two sidebands around the carrier frequency. These sidebands produce differential mode current harmonics, which propagate to the grid. In order to comply with grid standards such as IEEE-519, an LCL filtering stage needs to be connected in series to the converter, which suppresses these differential mode current harmonics. Such a passive filter, consisting of inductors and capacitors, usually makes-up a considerable portion of the converter volume, weight and costs.

Fig. 4 shows a diagram of level-shifted in-phase disposition (LS-IPD) carrier modulation. LS-IPD can be applied for any number of voltage levels. Similar to the phase-shifted carrier modulation, for a converter with N output voltage levels N-1 triangular carriers are required. The amplitude of each carrier is 1/(N-1). These carriers are disposed above each other by an offset of 2/(N-1) such that the carriers lay between the voltage levels, as depicted in Figure 4. The carrier frequency is increased by a factor of (N-1) to make a fair comparison with the PS modulation. The switching time instants can be determined by comparing the voltage reference signal with one of the triangular carriers. However, this method only determines the switching time instants and the required voltage level. To generate a particular voltage level many different redundant switching states can be applied. The redundant states can be used to achieve various benefits, similar as in the SV modulation, for example to generate a common mode voltage, the balancing of the flying capacitors voltages, or to evenly distribute the switching actions among the semiconductors. In order to properly select the switching state, in addition to the modulator, a redundant state selector 41 is needed to determine the required switching state for generating a defined voltage level and to achieve further improvements. In the considered example of a flying capacitor converter, the natural balancing is not built-in, but can be provided by the redundant state selector. The filtering effort in terms of component size and costs is reduced compared to PS, however, like in the space vector modulation, with increasing number of voltage levels the number of redundant switching states increases, and the selection process, in particular the implementation of the redundant state selector 41, becomes difficult and rather complex. Therefore, it is usually not adopted for the multi-level flying capacitor topology.

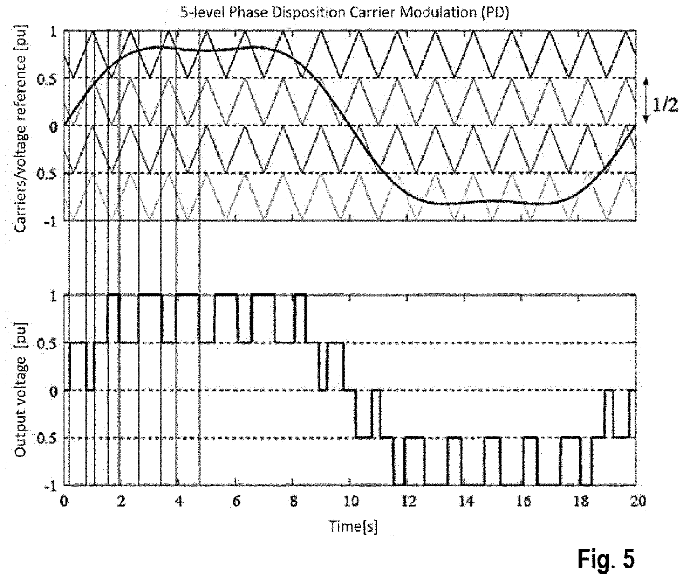

Fig. 5 shows a diagram of an LS-IPD carrier modulation process and switched output voltage for a 5-level converter system. The carriers are offset by ½ with respect to each other. The voltage levels are indicated by dashed lines. In addition to the modulator, a redundant state selector is required to determine the switching states in order to generate the output voltage signal.

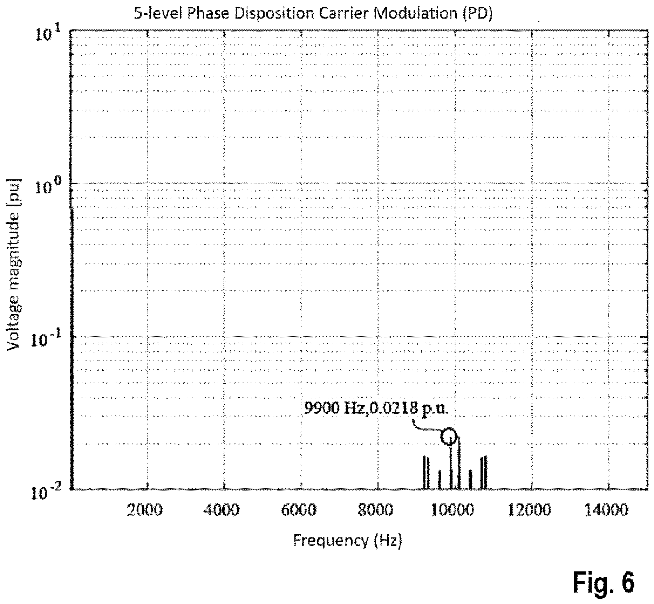

Fig. 6 shows a diagram of a differential mode output voltage spectrum using the LD-IPD carrier modulation method with a carrier frequency of 10 kHz. A significantly reduced voltage amplitude on the side bands of the carrier frequency compared to PS can be observed (compare to Fig. 3).

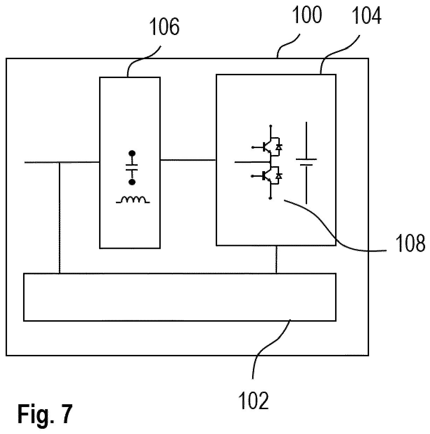

Fig. 7 shows a block diagram of the N-level converter 100 as described herein. The converter 100 comprises a control circuit 102, a switching circuit 104 with switch arrangements of which one arrangement 108 is shown, and a filter 106, which may be an LCL filter.

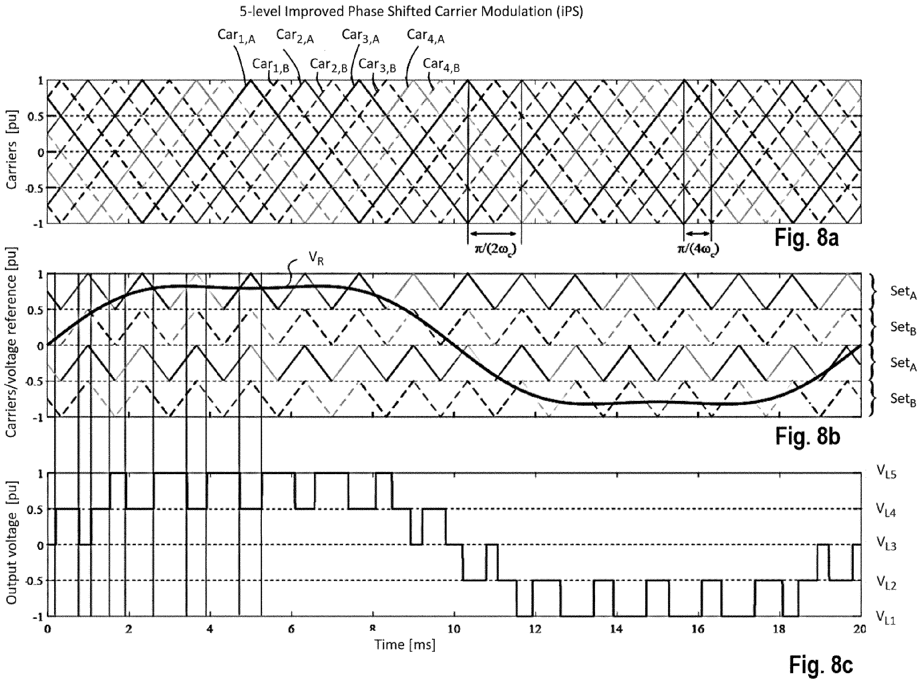

In Fig. 8a, a configuration example of the N-level converter 100 is shown with two carrier sets. Thus, supposing, in the example, that a converter system with N voltage levels has two sets ($Set_A$ and $Set_B$) of (N-1) triangular carriers

$$(Car_{i,A} \in Set_A \text{ and } Car_{i,B} \in Set_B, \text{ with } i = [1, (N-1)]),$$

then 2(N-1) carriers are required (see Fig. 8a)). Within each set, the carriers are shifted by a phase angle of 360°/(N-1) to each other, with respect to the carrier frequency $\omega_c = 2\pi f_C$. This means, the phase angle of carrier $i$ in $Set_A$ is

$$\phi_{i,A} = (i-1) \cdot 360°/(N-1), \text{ with } i \in [1, (N-1)].$$

That is, the phase difference between two carriers is $\phi_{i+1,A} - \phi_{i,A} = 360°/(N-1)$. The carriers in this example have a triangular shape. However, the shape may also be a sawtooth, curved, etc.

The carriers, the voltage reference and the output voltage of the converter (after the switch stages) are depicted over time. In Figs. 8a and 8b, the carriers of the first set ($Car_{i,A} \in Set_A$) are indicated by solid lines, and the carriers of the second set ($Car_{i,B} \in Set_B$) are indicated by dashed lines. Each carrier set comprises 4 carriers, such that M = 8. Therefore, the phase distance or phase shift between two carriers of the same set is $\pi/(2\,\omega_c)$, and the distance between two neighboring carriers is always $\pi/(4\,\omega_c)$, which is the phase shift of the two carrier sets.

As illustrated in Fig. 8a, in a voltage sub-range, i.e., the range between the voltage levels $V_{Li}$, always only one carrier set is active, indicated by $Set_A$ and $Set_B$. That is, if the reference voltage $v_R$ is, for example in the sub-range 1 >= $V_R$ > 0.5, always $Set_A$ is active. In the next lower sub-range, 0.5 >= $V_R$ > 0, always $Set_B$ is active, etc.

Fig. 8c shows the generated rectangular voltage signal resulting from the comparison of the voltage reference signal $V_R$ and the carriers.

Each carrier in a set is dedicated to a defined set of switches, which is called switch arrangement in this disclosure. The switch arrangement may be, for example, the high side and the low side switches of a half-bridge. Each carrier defines the switching state of the switch arrangement it is dedicated to. For both carrier sets ($Set_A$ and $Set_B$), the assignment of switches and switching states is implemented such that $Car_{i,A}$ and $Car_{i,B}$ control the same switches. That is, carrier $i$ of carrier set $Set_A$ controls the switches of a switching arrangement is dedicated to, and carrier $i$ of carrier set $Set_B$ controls the same switching set. However, the two carrier sets $Set_A$ and $Set_B$ are not active at the same time. By two carrier sets controlling the same switching arrangement, the selection process of the switching states is simplified such that no additional selector unit is needed.

The two carrier sets are additionally shifted by a phase angle of 180°/(N-1) with respect to each other, $\phi_{i,B} - \phi_{i,A}$ = 180°/(N - 1). That is, the carriers of set $Set_A$ and $Set_B$ are interleaved one by one. All carriers are equally spaced from their neighbors by a frequency shift of 180°/(N - 1).

The voltage levels of an N-level converter system are at

$$V_{L,k} = -1 + \frac{2(k-1)}{N-1}, k \in [1, N].$$

As can be seen in Fig. 8b, the amplitude of each carrier covers the complete voltage range from -1 to 1. In-between two voltage levels always only one carrier set is active, which is compared to the voltage reference signal $V_R$ to generate the switching signals. The carrier set which is active is alternated when the voltage reference crosses a voltage level (see Fig. 8b)).

$$V_{L,j+1} \geq v_R > V_{L,j} \begin{cases} j \text{ is even} \to Set_A \text{ active} \\ j \text{ is odd} \to Set_B \text{ active} \end{cases}, j \in [1, (N-1)]$$

Since the carriers correspond to defined switches, the presented iPS (improved phase shifted carrier) modulation method naturally cycles through all redundant states. Thus, it features a natural balancing of the flying capacitors as well as an even distribution of the switching actions among the semiconductors. Moreover, with the iPS modulation method a good output voltage quality can be achieved, equivalent to the LS-IPD modulation method. This significantly reduces the filtering effort in terms of size and costs of components compared to the often-applied PS modulation method. At the same time, the complexity in terms of computing resources and implementation effort stays quite low since no additional selector unit is needed and the carriers correspond to defined switches. Furthermore, the method can be implemented easily in low-cost DSP computing platforms with integrated PWM units.

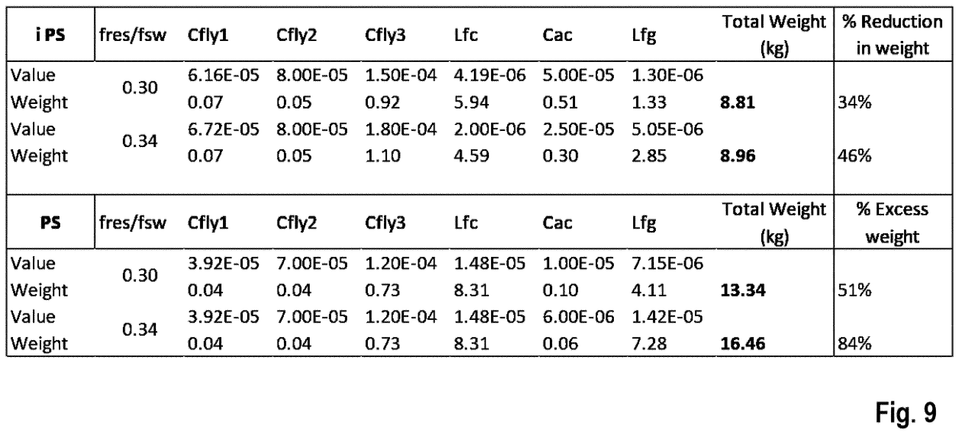

The converter may be, for example, a 90 kW 5-level Flying Capacitor converter switching at 18 kHz. Owing to the frequency multiplication effect achieved by PS type modulation, the LCL filter faces a pulse frequency of 4 x 18 = 72 kHz, ensuring that the 2nd harmonic of the pulse frequency (144 kHz) is still below conducted emission band. Fig. 9 shows a table comparing the total weight of LCL filters when using the iPS modulation and when using the PS modulation for a ratio of **fres/fsw** = 0.3 and a ratio of **fres/fsw** 0.34. The resonant frequency of a 3'rd order LCL filter is typically selected to be the 1/3rd of the switching frequency, although this is not a must. However, for this typical design point, the table in Fig. 9 shows the weight of the LCL-filter for the iPS in comparison to the PS modulation method for two resonant frequencies given relative to switching frequency (**fres/fsw**), both close to 1/3rd criteria. The weight reduction by using iPS is between 30-50% compared to the PS modulation method. The iPS modulation can lead to a significant impact on the low frequency grid harmonic filter, which is usually one of three most bulky parts of any power converter beside the DC-link capacitor bank and the heat-sink.

The design may be chosen such that a minimum weight is obtained by varying space of cores, wire sizes and capacitor parts. This may be achieved using a software-based weight searching algorithm, which utilizes a wide design range of the components that may be varied. For both considered design points a clear reduction of the weight by 30%-50% can be achieved. Assuming that the price of the filter is mainly depending on the amount of material, also the costs of the LCL filter can be reduced in the similar range.

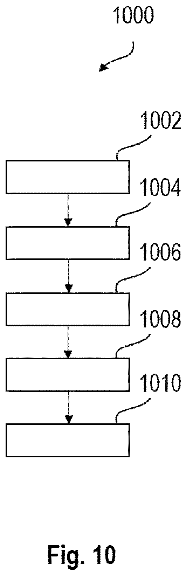

Fig. 10 shows a flow diagram of the method 1000 for generating an output voltage by controlling switch arrangements in an N-Level converter with N-1 output voltage sub-ranges according to an embodiment. The method is referred to as improved phase shifted carrier modulation (iPS) in this disclosure. It can be applied in multi-level converter systems with any number of voltage levels. In a first step, 1002, a reference signal within a reference voltage full range is generated, wherein the reference voltage full range is formed by reference voltage sub-ranges defined by N reference voltage levels; in a second step, 1004, M carriers are generated, each carrier covering the reference signal voltage full-range. In third step, 1006, a number of carriers out of the M carriers is compared with the reference signal. The M carriers differ in phase and have the same maximum and minimum voltage values. The M carriers are divided into L carrier sets, each carrier set including the carriers to be compared. In a further step, 1008, a PWM pulse for each of the compared carriers is generated based on the comparison. In a next step, 1010, a converter switch arrangement out of the number of switches is controlled using the PWM pulses for generating a voltage contributing to an converter output voltage level to be generated, and each carrier set is assigned to one of the reference signal voltage sub-ranges, wherein only that carrier set is active for the generation of PWM pulses that is assigned to the sub-range the reference signal voltage is in.

This modulation method is unique in the sense that it combines the best of both the low complexity of the popular PS modulation method and the excellent output voltage spectrum of the LS-IPD modulation method. Thus, this new method can deliver all the above advantages, enabling a clear cost per kW and cost per power density benefit compared to other modulation methods. Moreover, due to its low complexity implementation, just like PS, there is no problem in extending its application to multi-level converter systems with a high number of voltage levels, while the implementation of LS-IPD and SV, due to their state-sector algorithms, can get really cumbersome with the increasing number of voltage levels.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

## Claims

1. N-level converter (100), configured to generate an output voltage out of N output voltage levels, the N level converter comprising

   a switching circuit (104) with a number of switches, and
   a control circuit (102) configured to

   generate a reference signal within a reference voltage full range, wherein the reference voltage full range is formed by reference voltage sub-ranges defined by N reference voltage levels;
   generate M carriers, each carrier covering the reference signal voltage full-range;
   comparing a number of carriers out of the M carriers with the reference signal;
   generating a PWM pulse for each of the compared carriers based on the comparison;
   controlling a converter switch arrangement (108) out of the number of switches using the PWM pulses for generating a voltage contributing to an converter output voltage level to be generated; wherein

   the M carriers differ in phase and have the same maximum and minimum voltage values, and wherein the M carriers are divided into L carrier sets (Set$_A$, Set$_B$), each carrier set including the carriers to be compared, and each carrier set is assigned to one of the reference signal voltage sub-ranges, wherein only that carrier set is active for the generation of PWM pulses that is assigned to the sub-range the reference signal voltage is in.

2. N-level converter (100) according to claim 1, wherein different carrier sets control the same switch arrangements, and the sequence of the carriers is such that the sets are cycling.

3. N-level converter (100) according to claim 1 or 2, wherein the carriers are equally-spaced phase shifted.

4. N-level converter (100) according to any of the previous claims, wherein the number L of carrier sets is 2, and the carriers of a carrier set are shifted by a phase angle of 360°/(N-1) to each other, with respect to the carrier frequency $\omega_c = 2\pi f_C$, and the carrier sets are shifted by a phase angle of 180°/(N-1) against each other

5. N-level converter (100) according to any of the previous claims, wherein each carrier has a triangular shape.

**6.** N-level converter (100) according to any of the previous claims, wherein the number of reference voltage sub-ranges equals the number of levels N minus one, and a ratio number of reference voltage sub-ranges to the number of sets L is a positive integer.

**7.** N-level converter (100) according to any of the previous claims, wherein the N-Level converter comprises half bridges and a switch arrangement comprises a high-side switch and a low-side switch of the half bridge.

**8.** N-level converter (100) according to any of the previous claims, wherein the N-level converter is a N-level classic flying capacitor converter system, a multi-level converter system, an interleaved half-bridge converter system, a cascaded H-bridge or a modular multi-level converter system.

**9.** N-level converter (100) according to any of the previous claims, wherein the N-Level converter comprises spectral characteristics essentially based on a selection of one or more of the following parameters: number of carriers, number of carrier sets and/or assignment of carrier set to the reference voltage levels.

**10.** N-level converter (100) according to claim 9, wherein the converter comprises an LCL filter with spectral characteristics according to claim 9, wherein a weight component is defined by the LCL filter, and wherein the weight component is based on the selection of one or more of the following LCL filter design parameters: space of cores, wire sizes and/or capacitors.

**11.** Method for generating an output voltage in an N-Level converter according to any of the previous claims, comprising the steps:

generating a reference signal within a reference voltage full range, wherein the reference voltage full range is formed by reference voltage sub-ranges defined by N reference voltage levels;
generating M carriers, each carrier covering the reference signal voltage full-range;
comparing a number of carriers out of the M carriers with the references signal;
generating a PWM pulse for each of the compared carriers based on the comparison;
controlling a converter switch arrangement out of the number of switches using the PWM pulses for generating a voltage contributing to an converter output voltage level to be generated; wherein
the M carriers differ in phase and have the same maximum and minimum voltage values, and wherein
the M carriers are divided into L carrier sets, each carrier set including the carriers to be compared, and each carrier set is assigned to one of the reference signal voltage sub-ranges, wherein only that carrier set is active for the generation of PWM pulses that is assigned to the sub-range the reference signal voltage is in.

**12.** Logic instruction arrangement for an N-Level converter according to any of claims 1 to 10, configured to perform the method for controlling switch arrangements according to claim 11.

**13.** Controller for an N-Level converter, comprising a logic instruction arrangement according to claim 11 and/or analog circuits, configured to control an N-Level converter according to any of claims 1 to 10.

**14.** Usage of a logic instruction arrangement according to claim 12 in an N-Level converter according to any of claims 1 to 10.

**15.** Usage of an N-level converter (100) according to any of claims 1 to 10 in an electrical vehicle charging station, an uninterrupted power supply system, a photovoltaic converter, a battery energy storage system or a high speed drive.

Fig. 1

Fig. 2

Spectrum 5-level Phase Shifted Carrier Modulation

**Fig. 3**

**Fig. 4**

5-level Phase Disposition Carrier Modulation (PD)

Fig. 5

5-level Phase Disposition Carrier Modulation (PD)

9900 Hz,0.0218 p.u.

Fig. 6

**Fig. 7**

5-level Improved Phase Shifted Carrier Modulation (iPS)

Fig. 8a

Fig. 8b

Fig. 8c

Time [ms]

EP 4 057 493 A1

| i PS | fres/fsw | Cfly1 | Cfly2 | Cfly3 | Lfc | Cac | Lfg | Total Weight (kg) | % Reduction in weight |
|---|---|---|---|---|---|---|---|---|---|
| Value | 0.30 | 6.16E-05 | 8.00E-05 | 1.50E-04 | 4.19E-06 | 5.00E-05 | 1.30E-06 | | |
| Weight | | 0.07 | 0.05 | 0.92 | 5.94 | 0.51 | 1.33 | **8.81** | 34% |
| Value | 0.34 | 6.72E-05 | 8.00E-05 | 1.80E-04 | 2.00E-06 | 2.50E-05 | 5.05E-06 | | |
| Weight | | 0.07 | 0.05 | 1.10 | 4.59 | 0.30 | 2.85 | **8.96** | 46% |

| PS | fres/fsw | Cfly1 | Cfly2 | Cfly3 | Lfc | Cac | Lfg | Total Weight (kg) | % Excess weight |
|---|---|---|---|---|---|---|---|---|---|
| Value | 0.30 | 3.92E-05 | 7.00E-05 | 1.20E-04 | 1.48E-05 | 1.00E-05 | 7.15E-06 | | |
| Weight | | 0.04 | 0.04 | 0.73 | 8.31 | 0.10 | 4.11 | **13.34** | 51% |
| Value | 0.34 | 3.92E-05 | 7.00E-05 | 1.20E-04 | 1.48E-05 | 6.00E-06 | 1.42E-05 | | |
| Weight | | 0.04 | 0.04 | 0.73 | 8.31 | 0.06 | 7.28 | **16.46** | 84% |

Fig. 9

Fig. 10

Europäisches
Patentamt

European
Patent Office

Office européen
des brevets

# EUROPEAN SEARCH REPORT

Application Number

EP 21 16 1529

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GHIAS AMER M Y M ET AL: "On Improving Phase-Shifted PWM for Flying Capacitor Multilevel Converters", IEEE TRANSACTIONS ON POWER ELECTRONICS, INSTITUTE OF ELECTRICAL AND ELECTRONICS ENGINEERS, USA, vol. 31, no. 8, August 2016 (2016-08), pages 5384-5388, XP011608715, ISSN: 0885-8993, DOI: 10.1109/TPEL.2016.2521803 [retrieved on 2016-03-02] * the whole document * | 1-15 | INV. H02M7/483 H02M7/5395 H02M1/00 ADD. H02M1/12 |
| X | WANG KUI ET AL: "An Improved Phase-Shifted PWM for a Five-Level Hybrid-Clamped Converter With Optimized THD", IEEE TRANSACTIONS ON INDUSTRY APPLICATIONS, IEEE SERVICE CENTER, PISCATAWAY, NJ, US, vol. 56, no. 1, 21 October 2019 (2019-10-21), pages 455-464, XP011766861, ISSN: 0093-9994, DOI: 10.1109/TIA.2019.2948805 [retrieved on 2020-01-17] * the whole document * | 1-15 | |
| A | WO 2019/098999 A1 (SIEMENS AG [DE]) 23 May 2019 (2019-05-23) * paragraph [0004] * * paragraph [0035] - paragraph [0042] * * figures 1-5 * | 1-15 | TECHNICAL FIELDS SEARCHED (IPC) H02M |

The present search report has been drawn up for all claims

| Place of search | Date of completion of the search | Examiner |
|---|---|---|
| The Hague | 29 July 2021 | Lochhead, Steven |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 16 1529

This annex lists the patent family members relating to the patent documents cited in the above-mentioned European search report.
The members are as contained in the European Patent Office EDP file on
The European Patent Office is in no way liable for these particulars which are merely given for the purpose of information.

29-07-2021

| Patent document cited in search report | Publication date | Patent family member(s) | Publication date |
|---|---|---|---|
| WO 2019098999 A1 | 23-05-2019 | BR 112020008306 A2<br>CA 3088091 A1<br>CN 111357185 A<br>EP 3682538 A1<br>US 2020244183 A1<br>WO 2019098999 A1 | 20-10-2020<br>23-05-2019<br>30-06-2020<br>22-07-2020<br>30-07-2020<br>23-05-2019 |

EPO FORM P0459

For more details about this annex : see Official Journal of the European Patent Office, No. 12/82